# EUROPÄISCHE PATENTSCHRIFT

(11) **EP 1 214 979 B1**
(45) Veröffentlichungstag und Bekanntmachung des Hinweises auf die Patenterteilung: **16.01.2008**
(21) Anmeldenummer: 01129855.1
(22) Anmeldetag: 14.12.2001
(51) Int. Cl.: B02C 13/28, B02C 18/14, B02C 18/18

(54) **Fräszahn für eine Zerkleinerungsmaschine**
Milling tooth for comminuting machine
Dent de fraisage pour machine de broyage

(30) Priorität: 15.12.2000 DE 20021216 U
(43) Veröffentlichungstag der Anmeldung: 19.06.2002
(73) Patentinhaber: FAE Group S.p.A., 38013 Fondo TN (IT)
(72) Erfinder: Pizzuto, Gianfranco, 38013 Fondo (IT)
(74) Vertreter: Zeitler, Giselher

(56) Entgegenhaltungen:
- DE-A- 19 949 664
- US-A- 4 871 119
- US-A- 5 950 945

## Beschreibung

Die vorliegende Erfindung betrifft einen Fräszahn für eine Zerkleinerungsmaschine, gemäß dem Oberbegriff des Anspruchs 1.

Fräszähne in Form von Schlegelmessern oder ähnlichem für Bodenbearbeitungsmaschinen, wie beispielsweise Mäher, Häcksler oder Mulcher, sind beispielsweise aus US 3 678 671, DE 199 51 086 oder EP 0 182 122 bekannt. Diese Fräszähne werden in der Regeln federnd an einer rotierenden Trommel gelagert, so daß plötzliche mechanische Einwirkungen bzw. Stöße aufgrund von Steinen oder ähnlichem nicht zu einer sofortigen Zerstörung der betroffenen Fräszähne führen. Die gewünschte Wirkung besonders bei harten Materialien, wie beispielsweise Holz, ist jedoch wegen der Federung begrenzt.

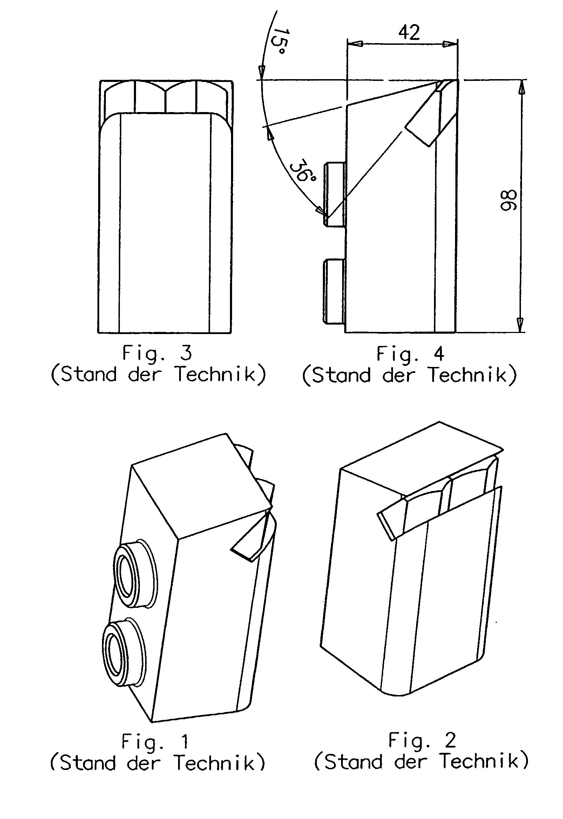

Es wurde daher bereits ein aus den Fig. 1 bis 4 ersichtlicher Fräszahn vorgeschlagen, welcher derart massiv ausgebildet ist, daß er starr an einem entsprechenden Fräszahnhalter einer rotierenden Trommel einer Zerkleinerungsmaschine befestigbar ist. Hierdurch können wesentlich höhere Einwirkungen mit besserem Zerkleinerungsergebnis erzielt werden. Derartige Fräszähne werden üblicherweise aus einem massiven, quaderförmigen Werkstück durch mechanisches Abtragen von Material heraus gearbeitet. Ein Nachteil dieser bekannten Fräszähne ist jedoch ein relativ hoher Verschleiß, so daß die Fräszähne bereits nach kurzer Standzeit (ca. 60 Betriebsstunden) ausgewechselt werden müssen. Da der Fräszahn somit ein hochgradiger Verschleißartikel ist, darf er nicht viel kosten.

Bei dem aus US-A-4 162 770 bekannten Fräszahn, weist der Fräszahnkörper in einer Richtung senkrecht zur Flanschseite am Fräszahnkopf eine größere Dicke auf als am Fräszahnfuß, wobei eine Längsachse der Schneideinrichtung mit der Oberseite des Fräszahnkopfes einen Winkel von größer 40° einschließt. Durch die unsymmetrische Gewichtsverteilung im Fräszahnkörper ist die Schlagkraft des Fräszahnes optimiert, wobei gleichzeitig durch die relativ steile Ausrichtung der Schneideinrichtung bzgl. der Oberseite des Fräszahnkopfes eine höhere Stabilität der Schneideinrichtung in der Ausnehmung und damit eine überraschend wesentlich höhere Standzeit erzielt wird obwohl sich durch diese "aggressive" Stellung der Schneideinrichtung eine deutlich stärkere Einwirkung auf zu zerkleinerndes Material ergibt.

Der Erfindung liegt die Aufgabe zugrunde, einen Fräszahn der o.g. Art bzgl. des Verhältnisses von Kosten zu Standzeit, d.h. bzgl. seiner Wirtschaftlichkeit, zu verbessern.

Diese Aufgabe wird erfindungsgemäß mit einem Fräszahn der o.g. Art mit den in Anspruch 1 gekennzeichneten Merkmalen gelöst. Vorteilhafte Ausgestaltungen der Erfindung sind in den weiteren Ansprüchen beschrieben.

Erfindungsgemäß schließt die Oberseite des Fräszahnkopfes mit einer Normalen zur Flanschebene einen Winkel von kleiner 10° ein.

Erfindungsgemäß ist ferner in dem Fräszahnkörper zur weiteren Erhöhung der Widerstandskraft des Fräszahnes gegen Abrieb und Verschleiß ist an einer Stirnseite des Fräszahnkopfes, welche in Bewegungsrichtung des Fräszahnes weist, wenigstens eine Hartmetallplatte angeordnet. Dies erhöht weiter die Standzeit und somit die Wirtschaftlichkeit des Fräszahnes.

Dies hat den Vorteil, daß durch die relativ flache Ausbildung der Oberseite des Fräszahnkopfes bzgl. einer Normalen zur Flanschseite ein Schutz für den in Arbeitsrichtung hinter dem Fräszahnkörper liegenden Fräszahnhalter deutlich verbessert wird, so daß auch dieser in überraschender Weise eine wesentlich höhere Standzeit aufweist. Zusätzlich hat sich in überraschender Weise gezeigt, daß sich dieselbe Zerkleinerungsarbeit mit weniger Energieaufwand erzielen läßt. Mit anderen Worten sinkt wahlweise die für die Zerkleinerungsarbeit notwendige Zeitspanne oder ein Kraftstoffverbrauch von Antriebsmotoren, die entsprechende Zerkleinerungsvorrichtungen antreiben. Dies ist u.a. die Folge der reduzierten Dicke des Fräszahnfußes, da der Fräszahn leichter in das zu zerkleinernde Material eindringt und mit weniger Kraftaufwand durchschleift.

Fertigungstechnische Vorteile bzgl. der Steilen Ausrichtung der Schneideinrichtung innerhalb der Ausnehmung ergeben sich dadurch, daß der Fräszahnkörper als Schmiedeteil, insbesondere Gesenkschmiedeteil, ausgebildet ist.

In einer besonders bevorzugten Ausführungsform beträgt der Winkel zwischen der Längsachse der Schneideinrichtung und der Oberseite des Fräszahnkopfes 40° bis 50°, insbesondere 46°. Ferner beträgt der Winkel zwischen der Oberseite des Fräszahnkopfes und der Normalen zur Flanschseite 0° bis 10°, insbesondere 7°.

Zweckmäßigerweise umfaßt die Schneideinrichtung wenigstens ein Hartmetallteil.

In besonders vorteilhafter Weise weist der Fräszahnkörper in Richtung parallel zur Flanschseite eine Dicke von 40 cm bis 50 cm, insbesondere von 47,7 cm auf.

Die Erfindung wird im folgenden anhand der Zeichnung näher erläutert. Diese zeigt in:
- Fig. 1: einen bekannten Fräszahn in perspektivischer Ansicht,
- Fig. 2: den Fräszahn von Fig. 1 in einer weiteren perspektivischen Ansicht,
- Fig. 3: den Fräszahn von Fig. 1 in einer Ansicht von vorne,
- Fig. 4: den Fräszahn von Fig. 1 in einer Seitenansicht,
- Fig. 5: eine Ausführungsform eines nicht erfindungsgemäßen Fräszahnes in perspektivischer Ansicht,
- Fig. 6: den Fräszahn von Fig. 5 in Vorderansicht,
- Fig. 7: den Fräszahn von Fig. 5 in Seitenansicht,
- Fig. 8: den Fräszahn von Fig. 5 in Schnittansicht,
- Fig. 9: eine bevorzugte Ausführungsform eines erfindungsgemäßen Fräszahnes in perspektivischer Ansicht,
- Fig. 10: den erfindungsgemäßen Fräszahn von Fig. 9 in Vorderansicht,
- Fig. 11: den erfindungsgemäßen Fräszahn von Fig. 9 in einer Schnittansicht entlang Linie A-A von Fig. 10,
- Fig. 12: den erfindungsgemäßen Fräszahn von Fig. 9 in einer weiteren Schnittansicht entlang Linie A-A von Fig. 10,
- Fig. 13: einen Fräszahnhalter mit einem Fräszahn gemäß Fig. 5 bis 8 in Explosionsdarstellung und
- Fig. 14: einen Fräszahnhalter mit einem erfindungsgemäßen Fräszahn gemäß Fig. 9 bis 12 in Explosionsdarstellung.

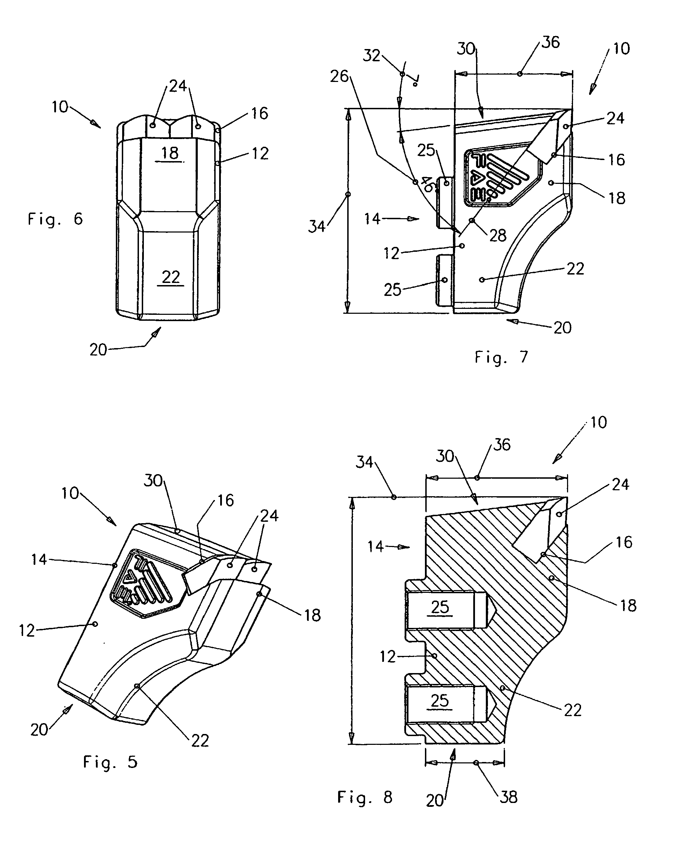

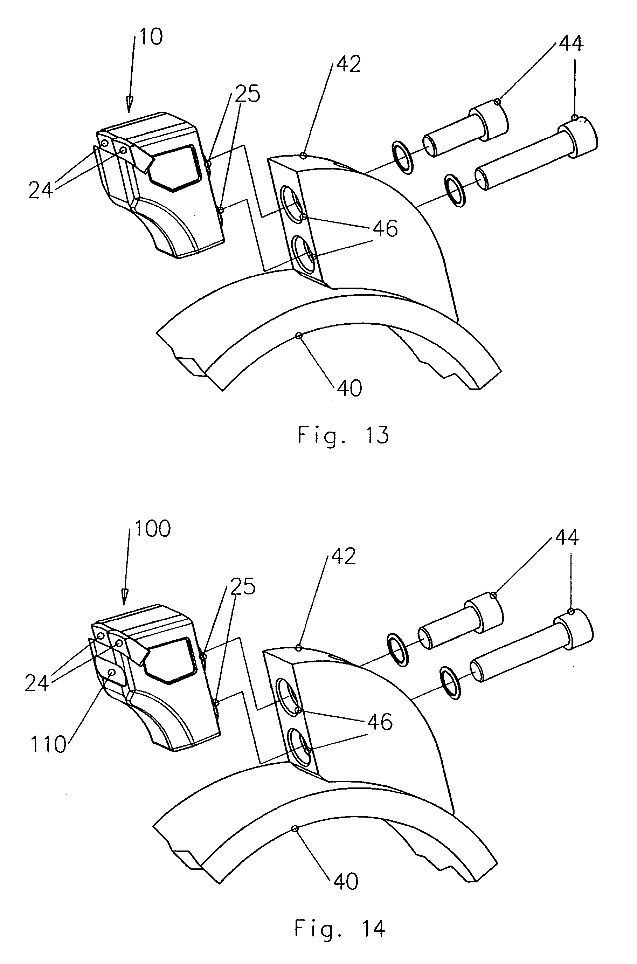

Der in Fig. 5 bis 8 dargestellte Fräszahn 10 für eine in der Gesamtheit nicht dargestellten Zerkleinerungsmaschine umfaßt einen Fräszahnkörper 12 mit einer Flanschseite 14 zum lösbaren Verbinden mit einem Fräszahnhalter der Zerkleinerungsmaschine, eine Ausnehmung 16, einen ausnehmungsseitigen Fräszahnkopf 18 sowie an einem dem Fräszahnkopf 18 abgewandten Ende 20 einen Fräszahnfuß 22. In der Ausnehmung 16 ist eine Schneideinrichtung in Form von zwei Hartmetallteilen 24 angeordnet. Diese Hartmetallteilen 24 sind beispielsweise in die Ausnehmung 16 eingelötet. An der Flanschseite 14 sind zwei Gewindebohrungen 25 ausgebildet, mittels derer eine verspannte Befestigung mit dem Fräszahnhalter erfolgt. Hierzu greift jeweils eine Schraube durch den Fräszahnhalter in die Gewindebohrung 25, wie später im Detail in Bezug auf Fig. 13 und 14 erläutert wird.

Wie insbesondere aus Fig. 7 ersichtlich, beträgt auch bei diesem Fräszahn 10 ein Winkel 26 zwischen der Längsachse 28 der Hartmetallteile 24 und einer Oberseite 30 des Fräszahnkopfes 18 46°. Ferner beträgt ein Winkel 32 zwischen der Oberseite 30 des Fräszahnkopfes 18 und der Normalen 34 zur Flanschebene 14 7°. Gegenüber dem herkömmlichen Fräszahn gemäß Fig. 1 bis 4 ist somit der Winkel 26 größer und der Winkel 32 kleiner ausgebildet. Der steilere Winkel 26 für die Hartmetallteile 24 bedingt einen besseren Halt derselben in der Ausnehmung 16. Der flachere Winkel 32 für die Oberseite 30 des Fräszahnkopfes 18 bedingt einen besseren Schutz für den Fräszahnhalter, welcher an der Flanschseite 14 des Fräszahnes 10, d.h. in Arbeitsrichtung hinter dem Fräszahn 10 angeordnet ist. Somit ergibt sich eine höher Standzeit auch für den Fräszahnhalter.

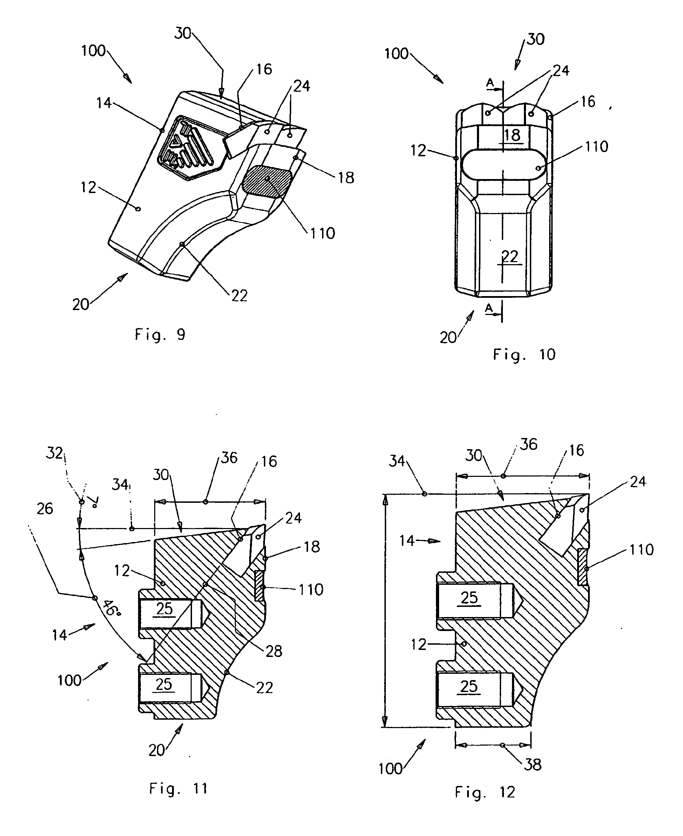

Die Fig. 9 bis 12 zeigen eine bevorzugte Ausführungsform eines erfindungsgemäßen Fräszahnes 100, wobei funktionsgleiche Teile mit gleichen Bezugsziffern gekennzeichnet sind, so daß zu deren Erläuterung auf die obige Beschreibung der Fig. 5 bis 8 verwiesen wird. Ein wesentliches Merkmal der zweiten Ausführungsform liegt darin, daß zusätzlich an einer Stirnseite des Fräszahnkopfes 18, welche in Bewegungsrichtung des Fräszahnes 100 weist, eine Hartmetallplatte 110 in dem Fräszahnkörper 12 angeordnet ist. Dies erhöht in vorteilhafter Weise die Haltbarkeit des Fräszahnkopfes 18, welcher durch direkten Materialkontakt besonderen Belastungen ausgesetzt ist, gegen Verschleiß. Die Hartmetallplatte 110 ist bevorzugt eingelötet.

Versuche haben ergeben, daß die Standzeit der erfindungsgemäßen Fräszähne 10; 100 in überraschender Weise bis zu 600 Stunden beträgt, wohingegen herkömmliche Fräszähne (Fig. 1 bis 4) eine Standzeit von lediglich 60 Stunden erreichen. Zusätzlich hat sich herausgestellt, da mit erfindungsgemäßen Fräszähnen die Zerkleinerung mit weniger Energieaufwand durchgeführt werden kann.

Durch die neuartige Schmiedeform ist, wie bereits erwähnt, das Maß 36 des Fräszahnkopfes 18 von 42 mm bei dem herkömmlichen Fräszahn (Fig. 1 bis 4) auf 56 mm erhöht. Da der Fräszahnkopf 18 beispielsweise bei Bodenbearbeitungsmaschinen kontinuierlichen Kontakt mit dem Boden hat, ist er besonderem Verschleiß ausgesetzt. Das größere Maß 36 erhöht die Standzeit des Fräszahnes 10; 100. Gleichzeitig erhöht sich die Schlagkraft, da die Gewichtsverteilung im Fräszahnkörper 12 optimiert ist. Ferner ist durch die neuartige Schmiedeform das Maß 38 des Fräszahnfußes 22 von 42 mm bei dem herkömmlichen Fräszahn (Fig. 1 bis 4) auf 31,5 mm reduziert. Dadurch kann der Fräszahn 10; 100 leichter in das zu zerkleinernde Material eindringen und mit weniger Kraft durchschleifen.

Diese besonders vorteilhaften Abmessungen des erfindungsgemäßen Fräszahnes werden dadurch die Herstellung des erfindungsgemäßen Fräszahnes mittels Gesenk-Schmieden erzielt. Hierdurch ist ein größerer Winkel 26 für die Hartmetallteile 24 herstellbar, als dies mit dem herkömmlichen Verfahren mittels Materialabtragen aus einem vollen Werkstück möglich war.

Fig. 13 und 14 veranschaulichen die Befestigung des Fräszahnes 10 bzw. 100 an einer rotierenden Trommel 40 einer Zerkleinerungsmaschine mittels Fräszahnhalter 42. Diese Fräszahnhalter 42 umfassen je zwei Durchgangsbohrungen 46, durch die Befestigungsschrauben 44 hindurch in die Gewindebohrngen 25 der Fräszähne 10, 100 greifen.

## Patentansprüche

1. Fräszahn (10; 100) für eine Zerkleinerungsmaschine, insbesondere für ein Forstgerät, einen Mulcher, eine Schreddervorrichtung, einen Häcksler oder eine Bodenbearbeitungsmaschine, mit einem Fräszahnkörper (12), welcher eine Flanschseite (14) zum lösbaren Verbinden mit einem Fräszahnhalter der Zerkleinerungsmaschine, eine Ausnehmung (16), einen ausnehmungsseitigen Fräszahnkopf (18) sowie an einem dem Fräszahnkopf (18) abgewandten Ende (20) einen Fräszahnfuß (22) aufweist, wobei in der Ausnehmung (16) eine Schneideinrichtung (24) angeordnet ist, wobei ferner in einer Richtung senkrecht zur Flanschseite (14) der Fräszahnkörper (12) am Fräszahnkopf (18) eine größere Dicke (36) aufweist als am Fräszahnfuß (22), wobei ferner eine Längsachse (28) der Schneideinrichtung (24) mit der Oberseite (30) des Fräszahnkopfes (18) einen Winkel (26) von größer 40° einschließt,
**dadurch gekennzeichnet,**
**dass** eine Oberseite (30) des Fräszahnkopfes (18) mit einer Normalen (34) zur Flanschseite (14) einen Winkel (32) von kleiner 10° einschließt, dass an einer Stirnseite des Fräszahnkopfes (18), welche in Bewegungsrichtung des Fräszahnes (100) weist, wenigstens eine Hartmetallplatte (110) in dem Fräszahnkörper (12) angeordnet ist.

2. Fräszahn (10; 100) nach Anspruch 1, **dadurch gekennzeichnet, dass** der Fräszahnkörper (12) als Schmiedeteil, insbesondere Gesenkschmiedeteil, ausgebildet ist.

3. Fräszahn (10; 100) nach Anspruch 1 oder 2, **dadurch gekennzeichnet, dass** der Winkel (26) zwischen der Längsachse (28) der Schneideinrichtung (24) und der Oberseite (30) des Fräszahnkopfes (18) 40° bis 50°, insbesondere 46°, beträgt.

4. Fräszahn (10; 100) nach wenigstens einem der vorhergehenden Ansprüche, **dadurch gekennzeichnet, dass** der Winkel (32) zwischen der Oberseite (30) des Fräszahnkopfes (18) und der Normalen (34) zur Flanschseite (14) 0° bis kleiner als 10°, insbesondere 7°, beträgt.

5. Fräszahn (10; 100) nach wenigstens einem der vorhergehenden Ansprüche, **dadurch gekennzeichnet, dass** die Schneideinrichtung (24) wenigstens ein Hartmetallteil umfasst.

6. Fräszahn (10; 100) nach wenigstens einem der vorhergehenden Ansprüche, **dadurch gekennzeichnet, dass** der Fräszahnkopf (18) in Richtung senkrecht zur Flanschseite (14) eine Dicke (36) von 45 cm bis 60 cm, insbesondere von 56 cm, aufweist.

7. Fräszahn (10; 100) nach wenigstens einem der vorhergehenden Ansprüche, **dadurch gekennzeichnet, dass** der Fräszahnfuß (22) in Richtung senkrecht zur Flanschseite (14) eine Dicke (38) kleiner oder gleich 40 cm, insbesondere von 31,5 cm aufweist.

8. Fräszahn (10; 100) nach wenigstens einem der vorhergehenden Ansprüche, **dadurch gekennzeichnet, dass** der Fräszahnkörper (12) in Richtung parallel zur Flanschseite und zur Oberseite (30) eine Dicke von 40 cm bis 50 cm, insbesondere von 47,7 cm aufweist.

## Claims

1. Cutting tooth (10; 100) for a comminuting machine, and in particular for an item of forestry equipment, a mulcher, a shredder, a chopping machine or a soil preparing machine, having a cutting-tooth body (12) which has a flange side (14) for releasable connection to a cutting-tooth holder of the comminuting machine, a recess (16), a cutting-tooth head (18) on the side on which the recess is situated, and a cutting-tooth foot (22) at an end (20) remote from the cutting-tooth head (18), a cutting means (24) being arranged in the recess (16), the thickness of the cutting-tooth body (12), in a direction perpendicular to the flange side (14), also being greater at the cutting-tooth head (18) than at the cutting-tooth foot (22) and a longitudinal axis (28) of the cutting means (24) making an angle of more than 40° with the top face (30) of the cutting-tooth head (18), **characterised in that** the top face (30) of the cutting-tooth head (18) makes an angle (32) of less than 10° with a normal (34) to the flange side (14), **in that** at least one cemented carbide plate (110) is arranged in the cutting-tooth body (12) on a side-face of the cutting-tooth head (18) which faces in the direction of movement of the cutting tooth (100).

2. Cutting tooth (10; 100) according to claim 1, **characterised in that** the cutting-tooth body (12) is in the form of a forging, and in particular a drop forging.

3. Cutting tooth (10; 100) according to claim 1 or 2, **characterised in that** the angle (26) between the longitudinal axis (28) of the cutting means (24) and the top face (30) of the cutting-tooth body (18) is 40° to 50° and in particular is 46°.

4. Cutting tooth (10; 100) according to at least one of the foregoing claims, **characterised in that** the angle (32) between the top face (30) of the cutting-tooth body (18) and the normal (34) to the flange side (14) is from 0° to less than 10° and in particular is 7°.

5. Cutting tooth (10; 100) according to at least one of the foregoing claims, **characterised in that** the cutting means (24) comprises at least one cemented carbide part.

6. Cutting tooth (10; 100) according to at least one of the foregoing claims, **characterised in that** the cutting-tooth head (18) is of a thickness (36) of 45 cm to 60 cm, and in particular of 56 cm, in the direction perpendicular to the flange side (14).

7. Cutting tooth (10; 100) according to at least one of the foregoing claims, **characterised in that** the cutting-tooth foot (22) is of a thickness (38) equal to or less than 40 cm, and in particular of 31.5 cm, in the direction perpendicular to the flange side (14).

8. Cutting tooth (10; 100) according to at least one of the foregoing claims, **characterised in that** the cutting-tooth body (12) is of a thickness of 40 cm to 50 cm, and in particular of 47.7 cm, in the direction parallel to the flange side and to the top face (30).

## Revendications

1. Dent de fraisage (10 ; 100) pour une machine de broyage, en particulier pour un appareil forestier, un broyeur de végétaux, une déchiqueteuse, une hacheuse ou une machine de traitement du sol, comportant un corps de dent de fraisage (12) qui présente un côté en bride (14) destiné à être relié de manière détachable à un support de dent de fraisage de la machine de broyage, un évidement (16), une tête de dent de fraisage (18) côté évidement ainsi qu'un pied de tête de fraisage (22) à une extrémité (20) détournée de la tête de dent de fraisage (18), un dispositif de coupe (24) étant agencé dans l'évidement (16), et en outre, dans une direction perpendiculaire au côté en bride (14), le corps de dent de fraisage (12) présente sur la tête de dent de fraisage (18) une plus grande épaisseur (36) que sur le pied de dent de fraisage (22), et en outre un axe longitudinal (28) du dispositif de coupe (24) forme avec la face supérieure (30) de la tête de dent de fraisage (18) un angle (26) supérieur à 40°,
**caractérisée en ce que**
une face supérieure (30) de la tête de dent de fraisage (18) forme avec une normale (34) par rapport au côté en bride (14) un angle (32) inférieur à 10°, **en ce que** sur une face frontale de la tête de dent de fraisage (18), qui est tournée en direction de mouvement de la dent de fraisage (100), au moins une plaque de métal dur (110) est agencée dans le corps de dent de fraisage (12).

2. Dent de fraisage (10 ; 100) selon la revendication 1, **caractérisée en ce que** le corps de dent de fraisage (12) est réalisé sous forme de pièce forgée, en particulier de pièce estampée.

3. Dent de fraisage (10 ; 100) selon la revendication 1 ou 2, **caractérisée en ce que** l'angle (26) entre l'axe longitudinal (28) du dispositif de coupe (24) et la face supérieure (30) de la tête de dent de fraisage (18) est entre 40° et 50°, en particulier de 46°.

4. Dent de fraisage (10 ; 100) selon au moins l'une des revendications précédentes, **caractérisée en ce que** l'angle (32) entre la face supérieure (30) de la tête de dent de fraisage (18) et la normale (34) par rapport au côté en bride (14) est de 0° à moins de 10°, en particulier de 7°.

5. Dent de fraisage (10 ; 100) selon au moins l'une des revendications précédentes, **caractérisée en ce que** le dispositif de coupe (24) comprend au moins une partie de métal dur.

6. Dent de fraisage (10 ; 100) selon au moins l'une des revendications précédentes, **caractérisée en ce que** la tête de dent de fraisage (18) présente en direction perpendiculaire au côté en bride (14) une épaisseur (36) de 45 cm à 60 cm, en particulier de 56 cm.

7. Dent de fraisage (10 ; 100) selon au moins l'une des revendications précédentes, **caractérisée en ce que** le pied de dent de fraisage (22) présente en direction perpendiculaire au côté en bride (14) une épaisseur (38) inférieure ou égale à 40 cm, en particulier de 31,5 cm.

8. Dent de fraisage (10 ; 100) selon au moins l'une des revendications précédentes, **caractérisée en ce que** le corps de dent de fraisage (12) présente en direction parallèle au côté en bride et à la face supérieure (30) une épaisseur de 40 cm à 50 cm, en particulier de 47,7 cm.
